(19) Europäisches Patentamt

European Patent Office

Office européen des brevets

(11) EP 1 443 018 A1

(12) EUROPEAN PATENT APPLICATION

(43) Date of publication:
04.08.2004 Bulletin 2004/32

(51) Int Cl.⁷: $B81B\ 5/00$, G11B 5/55, G01C 19/56

(21) Application number: 03425015.9

(22) Date of filing: 15.01.2003

(84) Designated Contracting States:
AT BE BG CH CY CZ DE DK EE ES FI FR GB GR HU IE IT LI LU MC NL PT SE SI SK TR
Designated Extension States:
AL LT LV MK RO

(71) Applicant: STMicroelectronics S.r.l.
20041 Agrate Brianza (Milano) (IT)

(72) Inventors:
• Sassolini, Simone
52037 Sansepolcro (IT)

• Del Sarto, Marco
54100 Massa (IT)
• Baldo, Lorenzo
20010 Bareggio (IT)

(74) Representative: Cerbaro, Elena et al
c/o Studio Torta S.r.l. Via Viotti, 9
10121 Torino (IT)

(54) Rotational micro-electromechanical (mems) structure with parallel electrodes

(57) A rotational micro-electro-mechanical structure includes a stator (21), having a plurality of stator electrodes (33, 34), and a rotor (23), which is rotatable with respect to the stator (21) about an axis of relative rotation (A) and has a plurality of rotor electrodes (30), the stator electrodes (33, 34) and the rotor electrodes (30) being comb-fingered; moreover, at least a first group (20a) of stator electrodes (33, 34) and rotor electrodes (30) are parallel to a first plane ($P_1$) that includes the axis of relative rotation (A).

Fig.5

**Description**

The present invention relates to a rotational micro-electro-mechanical structure with parallel electrodes.

As is known, modern techniques of semiconductor micromachining make it possible to form micro-electro-mechanical structures, also referred to as microstructures or MEMS (micro-electro-mechanical systems) structures, that may be used in a vast range of applications, on account of their very high versatility.

In particular, it is known to manufacture micromotors, microactuators and sensors of various physical quantities, such as, for example accelerometers or pressure sensors, which are based upon MEMS structures. In these cases, MEMS structures are generally formed which comprise a fixed body, known as stator, and a body that is movable with respect to the stator, and which is commonly referred to as rotor, irrespective of its geometry. The stator and the rotor are provided with a plurality of respective electrodes arranged facing one another, so as to form plates of capacitors having variable capacitance. In greater detail, such micromotors and microactuators exploit the electrostatic forces present between the plates of the capacitors; in practice, by biasing the electrodes of the rotor and the stator with appropriate voltages, the rotor is brought into a pre-determined relative position with respect to the stator. In sensors, instead, the rotor is movable as a result of variations in the quantities to be detected. Thus, in this case, the capacitive unbalancing determined by a displacement of the rotor with respect to a resting position is exploited; in other words, the capacitances of the capacitors are correlated in a known way to the relative position of the rotor and the stator. In an equivalent manner, the amount of the physical quantity affecting the sensor can be evaluated according to the electrostatic force that it is necessary to apply in order to maintain the rotor in the resting position.

According to the geometry and the type of degrees of freedom between the rotor and the stator, MEMS structures are normally divided into linear structures, in which the rotor substantially translates with respect to the stator along a direction or a plane, or rotational structures, in which the rotor is rotatable with respect to the stator.

For example, rotational MEMS structures are used to particular advantage for implementing the second actuation stage for fine positioning of the read/write head in hard-disk drives (HDDs). In this same context, rotational accelerometers made using MEMS structures are inserted in control feedback loops for compensating the effects of mechanical vibrations occurring during operation.

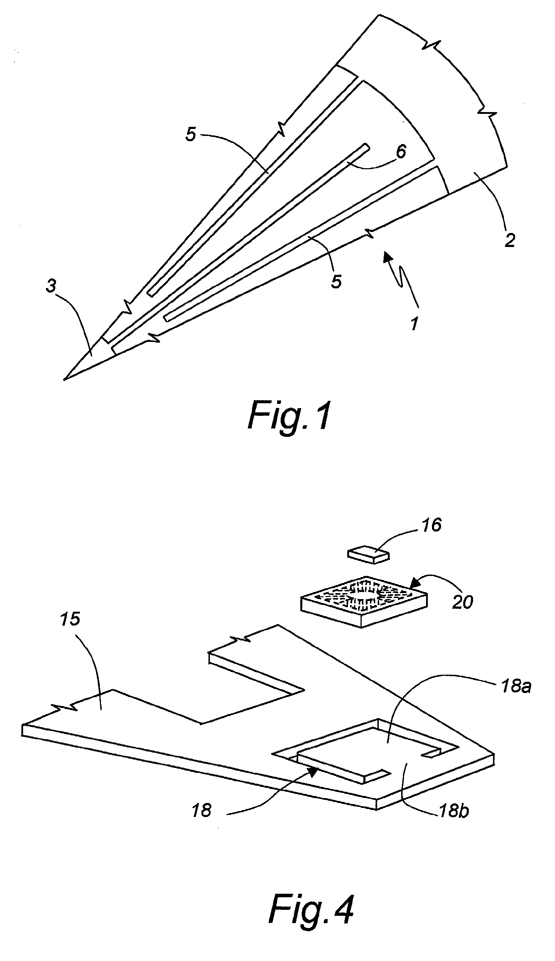

Rotational MEMS structures suffer, however, from some limitations, which are due principally to their geometry, which is of a radial type. With reference, for greater clarity, to Figure 1, a rotational MEMS structure 1 comprises a stator 2 and a rotor 3, which are concentric and connected to one another by springs (here not shown). The springs enable relative rotation of the rotor 3 with respect to the stator 2 about a central axis and prevent other movements. The stator 2 comprises a plurality of planar stator electrodes 5 with parallel faces, which extend radially inwards in the direction of the rotor 3; likewise, the rotor 3 comprises a plurality of rotor electrodes 6, which extend radially outwards in the direction of the stator 2. Moreover, the stator and rotor electrodes 5, 6 are comb-fingered.

Clearly, the spacing between each rotor electrode 5 and the stator electrodes 6 adjacent thereto increases from the center of the MEMS structure 1 towards the periphery. Therefore, the electrostatic forces between adjacent electrodes 5, 6 are not uniform, but are much smaller at the periphery than at the center of the MEMS structure 1. Furthermore, owing to the unexploited spaces, the MEMS structure 1 has a low compactness. A twofold drawback derives therefrom. On the one hand, in fact, the overall dimensions of the MEMS structure 1 are rather large, also in view of the minimum distance which must in any case be maintained even in proximity of the center, where the electrodes are closer to one another; in fact, it is absolutely necessary to prevent adjacent electrodes, by bending under the action of the electrostatic forces, from coming into contact with one another. On the other hand, the density of electrodes in the peripheral areas of the MEMS structure 1 is not optimal, and thus also the efficiency of a device based upon such a structure is degraded.

Obviously, it is possible to provide electrodes with faces that converge towards the free ends, instead of electrodes with planar faces. In this way, the spacing and the electrostatic forces between adjacent electrodes are uniform, but the problems regarding the overall dimensions and the density of electrodes are not solved.

The aim of the present invention is to provide a micro-electro-mechanical structure free from the drawbacks described above.

According to the present invention a rotational micro-electro-mechanical structure with parallel electrodes is provided, as claimed in claim 1.

For a better understanding of the invention, some embodiments thereof are now described, which are provided purely by way of non-limiting example and with reference to the attached drawings, wherein:

-   Figure 1 is a top plan view of a rotational micro-electro-mechanical structure of a known type;
-   Figure 2 is a top plan view of a read/write assembly for magnetic hard disks;
-   Figure 3 is a longitudinally sectioned side view of the read/write assembly of Figure 2;
-   Figure 4 is a simplified view of a detail of the assembly of Figure 2, including a micro-electro-mechanical structure, which implements a first embodiment of the present invention;

- Figure 5 is a schematic top plan view of the micro-electro-mechanical structure of Figure 4, in which parts have been removed;
- Figure 6 illustrates an enlarged detail of Figure 5;
- Figures 7 and 8 are cross sections through the micro-electro-mechanical structure of Figure 4, taken along lines VII-VII and, respectively, VIII-VIII of Figure 5;
- Figure 9 is a cross section of the micro-electro-mechanical structure of Figure 4 in use, taken along line IX-IX of Figure 5;
- Figure 10 is a schematic top plan view of a micro-electro-mechanical structure in a second embodiment of the present invention; and
- Figure 11 is a cross section of the micro-electro-mechanical structure of Figure 10, in use, taken along line XI-XI of Figure 10.

By way of example, reference will be made hereinafter to the case of microactuators integrated in actuator devices with dual actuation stage for reading hard disks. This must not, however, be considered in any way limiting, since the invention can be advantageously used for making also other types of devices, based upon micro-electro-mechanical structures (MEMS structures).

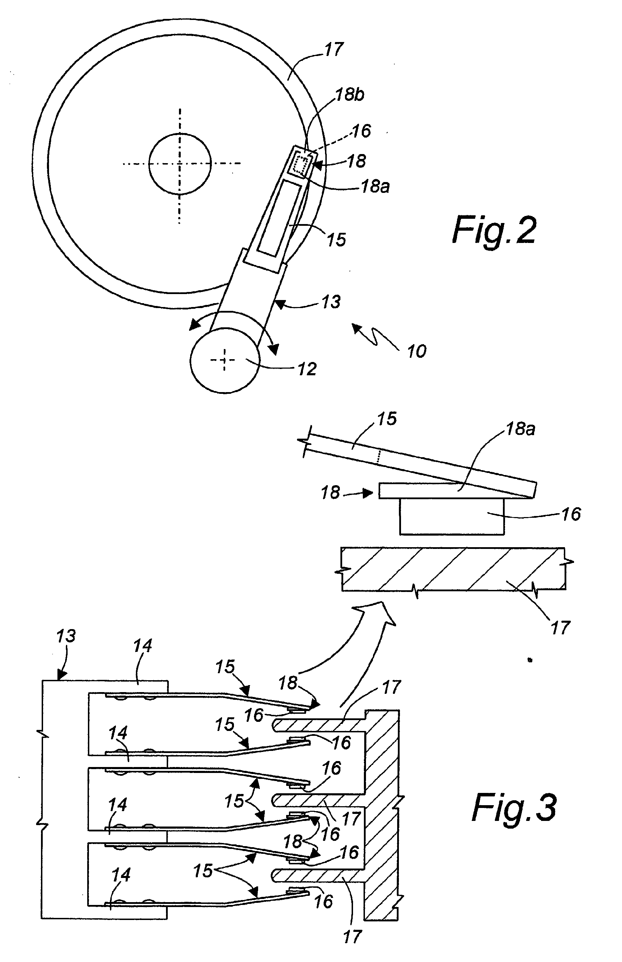

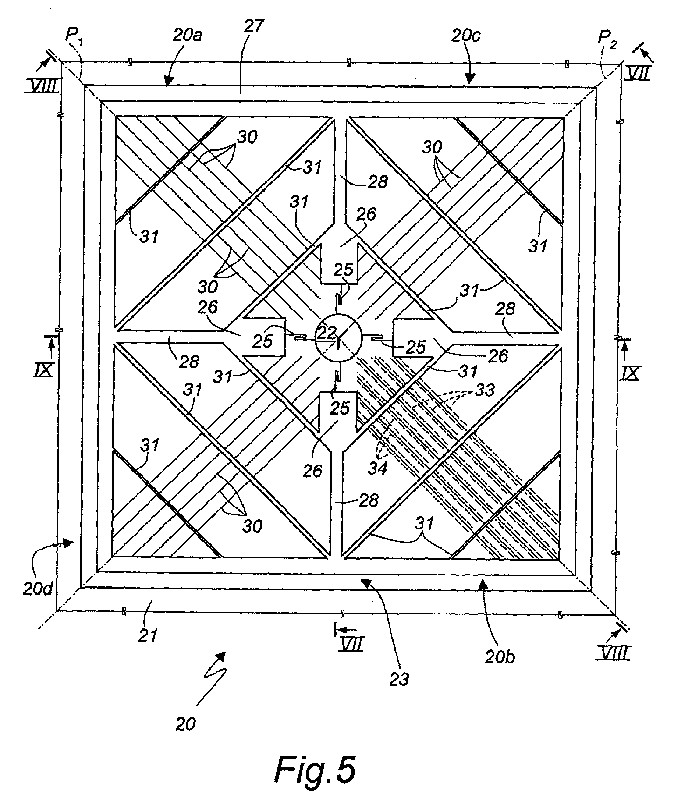

Figure 2 schematically illustrates a rotary type actuator device 10 comprising a motor 12 (also referred to as "voice-coil motor") fixed to a supporting body 13 generally designated as E-block on account of its E-like shape in side view (see Figure 3). The supporting body 13 has a plurality of arms 14 each carrying a suspension 15 formed by a plate fixed like a cantilever beam. Each suspension 15 carries, at one of its ends, i.e., the one that is not fixed to the supporting body 13, a read/write (R/W) transducer 16 arranged (in the operative condition) so as to face one surface of a hard disk 17 and to be able to perform movements of roll and pitch for following the surface of the hard disk 17. For this purpose, the R/W transducer 16 (also referred to as "slider") is fixed to a gimbal 18 (also called flexure), formed generally by the suspension 15 and consisting, for example, of a rectangular plate 18a, cut out on three and a half sides, from the plate of the suspension 15 and the portion 18b of which for connection to the suspension 15 enables flexing of the plate 18a (see Figure 4).

In order to increase the density of data storage, the actuator device 10 is equipped with a dual actuation stage, with a first coarser actuation stage, constituted by the motor 12, which displaces the assembly formed by the supporting body 13, the suspension 15 and the R/W slider 16 through the hard disk 17 during coarse search for the trace, and a second actuation stage that carries out a finer control of the position of the slider 16 during tracking. In particular, the second actuation stage comprises a microactuator 20 set between the gimbal 18 and the R/W transducer 16, as may be seen from Figure 4, which illustrates, in exploded view, the end of the suspension 15, the gimbal 18, the slider 16, and the microactuator 20, which here is of a rotational type.

The microactuator 20 is based upon a rotational type micro-electro-mechanical structure and will be described hereinafter in detail with reference to Figures 5 to 8, where some parts have been removed for clarity. The microactuator 20 comprises a stator 21, provided with a central pin 22, and a rotor 23, rotatable with respect to the stator 21 about an axis A of relative rotation, which is also an axis of the pin 22. More precisely, the rotor 23 oscillates about a relative position of equilibrium. Both the stator 21 and the rotor 23 are of semiconductor material, preferably polycrystalline silicon, and are moreover substantially symmetrical with respect to the axis A. The rotor 23 is connected to the stator 21 by springs 25 anchored to the pin 22. In greater detail, the springs 25 extend diametrically opposite from the pin 22, in radial directions with respect to the pin 22, and are connected to respective anchoring regions 26 of the rotor 23.

The rotor 23 is provided with a frame-like supporting structure 27, which in this case has a substantially square shape and is connected to the anchoring regions 26 via supporting arms 28, formed as radial extensions of the anchoring regions 26. In practice, the supporting arms 28 are in perpendicular pairs and divide the microactuator 20 into a first, a second, a third, and a fourth sector 20a-20d, arranged in diametrically opposite pairs with respect to the pin 22 and substantially symmetrical about the axis A. In greater detail, the first sector 20a and the second sector 20b are diametrically opposite to one another; the third sector 20c and the fourth sector 20d are also diametrically opposite to one another and are moreover adjacent to the first sector 20a and to the second sector 20b.

Each of the sectors 20a-20d of the microactuator 20 comprises a respective group of rotor electrodes 30, defined by respective planar semiconductor plates with substantially parallel faces. The rotor electrodes 30 are arranged according to respective planes parallel to the axis A. In greater detail, the rotor electrodes 30 of the first sector 20a and of the second sector 20b are parallel to a first plane $P_1$, which includes the axis A, are distributed in both of the opposite half-spaces defined by the first plane $P_1$, and are substantially arranged at equal distances apart from one another. The rotor electrodes 30 of the third sector 20c and of the fourth sector 20d are parallel to a second plane $P_2$, which includes the axis A and is substantially orthogonal to the first plane $P_1$, are distributed in both of the opposite half-spaces defined by the first plane $P_2$, and are substantially arranged at equal distances apart from one another. In practice, therefore, the rotor electrodes 30 of sectors 20a-20d opposite to the pin 22 are parallel to one another, whilst the rotor electrodes 30 of sectors 20a-20d that are adjacent are relatively rotated by an angle of approximately 90°.

In each of the sectors 20a-20d, the rotor electrodes 30 extend from regions inside the rotor 23 up to the supporting structure 27 and, preferably, their midpoints are aligned. For preventing bending of the rotor electrodes 30, in each sector 20a-20d the rotor 23 is provided with a plurality of reinforcement ribs 31, which extend transverse to the rotor electrodes 30 and are arranged at respective pre-determined distances from the axis A (for example, approximately one quarter, one half and three quarters of the longest rotor electrode 30).

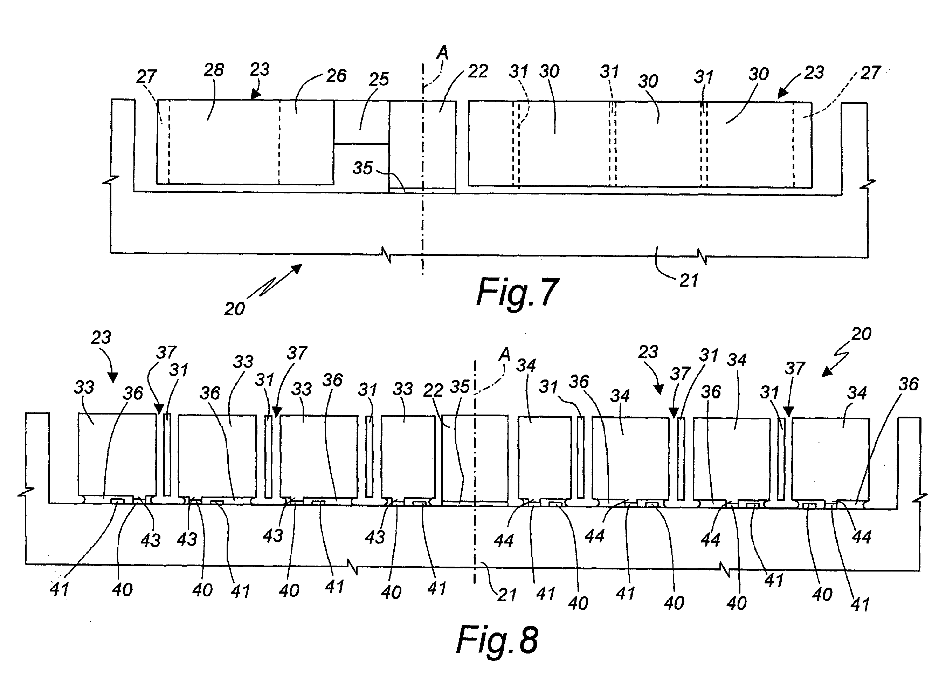

The stator 21 comprises a substrate 32, from which the pin 22 projects cantilevered, and groups of first and second stator electrodes 33, 34, which are comb-fingered with the rotor electrodes 30. In Figure 5, the stator electrodes 33, 34 are, for greater clarity, illustrated with dashed lines. In detail (see Figures 7 and 8), the pin 22, which is also of semiconductor material, is electrically insulated from the substrate 32 by a dielectric layer 35, whereas it is connected to the rotor 23 through the springs 25, which are conductive. In addition, an electrical-connection line connected to the pin 22, of known type and not illustrated here, enables bidirectional exchange of electrical signals between the rotor 23 and a control unit, which is also known and not illustrated.

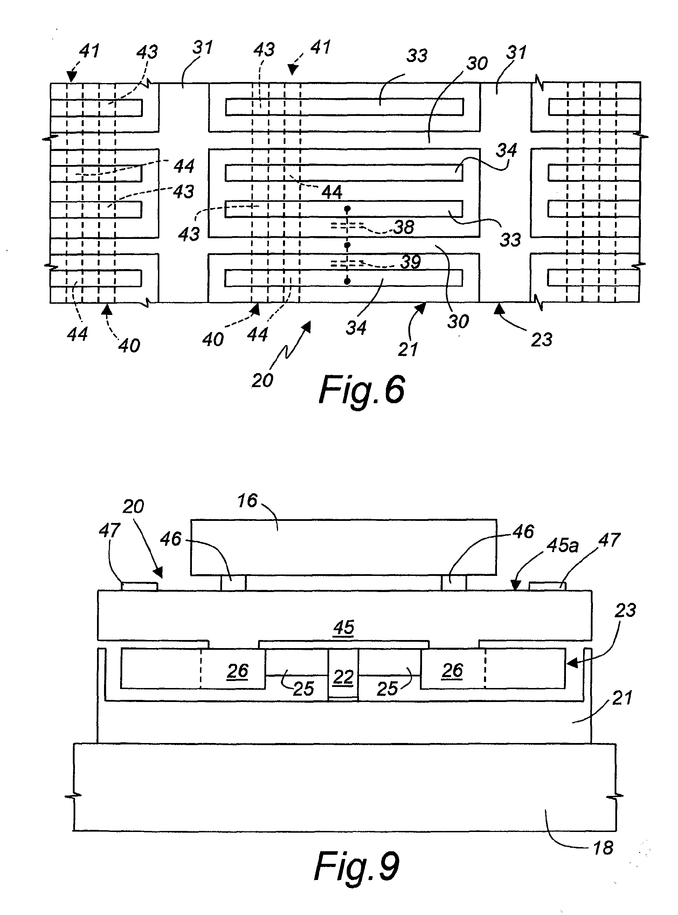

The stator electrodes 33, 34 are formed by respective semiconductor plates with planar and parallel faces, carried on respective insulating bases 36 (see Figure 8), and, like the rotor electrodes 30, are arranged according to respective planes parallel to the axis A. In greater detail, each of the rotor electrodes 30 is set between a respective first stator electrode 33 and a respective second stator electrode 34. Furthermore, each rotor electrode 30 and the first stator electrode 33 and the second stator electrode 34 adjacent thereto are substantially parallel and form a first capacitor 38 and, respectively, a second capacitor 39 having plane parallel plates and variable capacitance (see, in particular, Figure 6). In particular, the capacitances of the first capacitors 38 and the second capacitors 39 depend upon the distance between the rotor electrodes 30 and the respective adjacent stator electrodes 33, 34, and thus depend upon the relative angular position of the rotor 23 with respect to the stator 21. Clearly, the stator electrodes 33, 34 connected to the rotor electrodes 30 of the first sector 20a and second sector 20b are parallel to the first plane $P_1$, whereas the stator electrodes 33, 34 connected to the rotor electrodes 30 of the third sector 20a and of the fourth sector 20b are parallel to the second plane $P_2$. The stator electrodes 33, 34 moreover have interruptions 37, which house the reinforcement ribs 31 of the rotor 23.

As illustrated in Figures 6 to 8, first connection lines 40 and second connection lines 41 extend on the substrate 32, transverse to the first stator electrodes 33 and to the second stator electrodes 34, and are embedded in the insulating bases 36. The first stator electrodes 33 are connected to the immediately underlying first connection lines 40, through respective first connection regions 43. Likewise, the second stator electrodes 34 are connected to the immediately underlying second connection lines 41, through respective second connection regions 44.

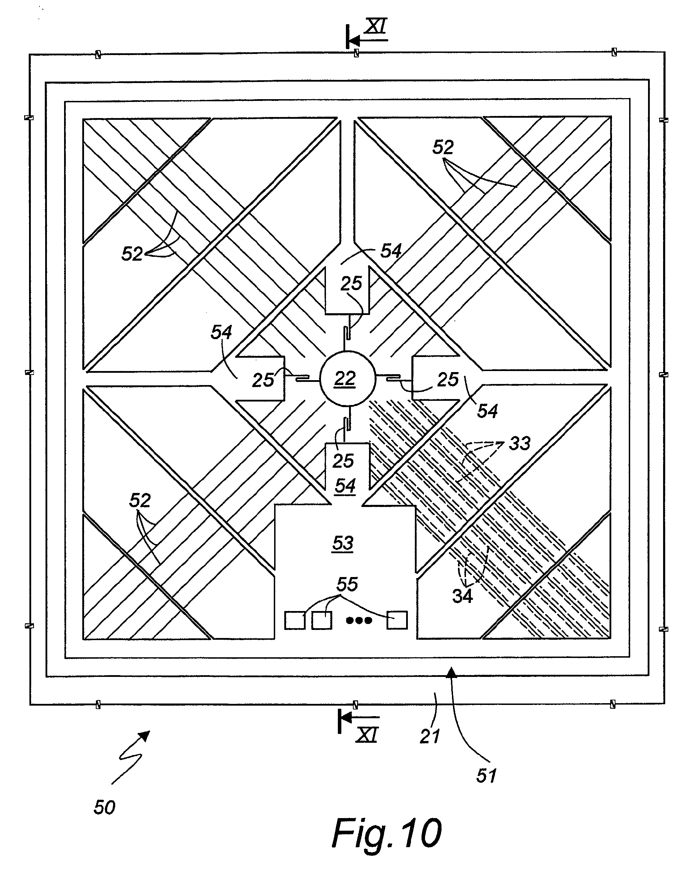

Figure 9 illustrates the microactuator 20 in use, mounted on the gimbal 18 and on the R/W transducer 16. In particular, Figure 9 also illustrates a protective cap 45 applied to provide a covering for the microactuator 20. The protective cap 45, which is also of semiconductor material, is bonded to the anchoring regions 26 of the rotor 23 and carries the R/W transducer 16 on a face 45a opposite to the rotor 23. For example, the R/W transducer 16 is bonded by a ring 46 of vitreous bonding material. Moreover, on the face 45a of the protective cap 45 pads 47 are provided for electrical connection of the R/W transducer 16.

The advantages of the invention emerge clearly from the above description.

First, in the microactuator 20, the rotor electrodes 30 and the respective adjacent stator electrodes 33, 34 are substantially parallel both in the relative resting position of the rotor 23 with respect to the stator 21, and when, in use, the rotor 23 is located outside said relative resting position. In fact, the oscillation permitted by the springs 26 that constrain the rotor 23 to the stator 21 is minimal and does not modify significantly the condition of parallelism. Consequently, the rotor and stator electrodes are subjected to electrostatic forces that are uniform throughout their extension.

Second, since all the adjacent rotor and stator electrodes are parallel, it is possible to achieve a high compactness and to reduce considerably the overall dimensions of the microactuator 20. In particular, owing to the uniform spacing between adjacent electrodes, all the space available is exploited in an optimal way. Advantageously, therefore, the microactuator 20 also has a high electrode density, which enables an increase in the efficiency of electrostatic force-torque conversion. In the embodiment described, in particular, the midpoints of the rotor electrodes are aligned and thus the resultant of the electrostatic forces applied to the rotor electrodes of a same sector is applied along the midline of the rotor electrodes themselves. If we designate by C the torque applied to the rotor 23, by F the resultant of the electrostatic forces acting upon one of the sectors 23a-23d and by L the length of the sides of the rotor 23, in each sector the arm of the resultant F with respect to the axis A is approximately equal to $L\sqrt{2}/4$ and thus the torque C is approximately $FL\sqrt{2}$. In practice, the conversion efficiency of the microactuator 20 is five to ten times greater than that of conventional rotational microactuators with a radial structure. From this point of view, also the use of the reinforcement ribs 31 is advantageous, since it enables strengthening of the rotor 23. It is thus also possible to make rotor electrodes that are very long for exploiting a larger arm, at the same time preventing the risks due to the flexure.

The microactuator 20 can moreover be fabricated using standard micromachining processes and techniques.

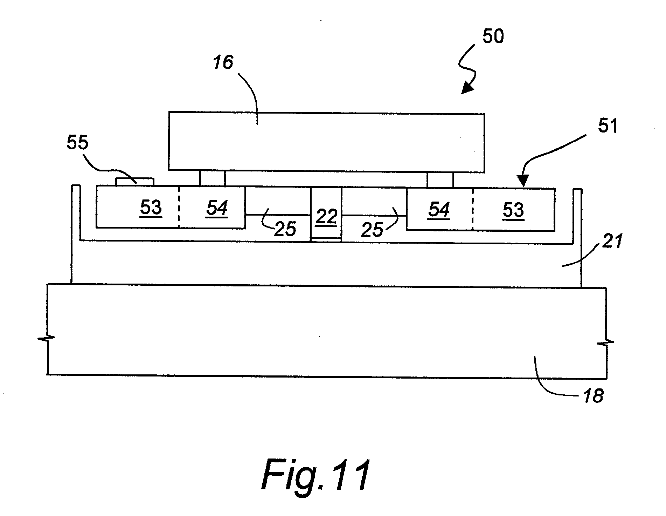

A second embodiment of the invention is illustrated in Figures 10 and 11, in which parts already shown are designated with the same reference numbers. In a microactuator 50, a rotor 51, which is rotatable with respect to the stator 21, is provided with rotor electrodes 52, arranged with respect to the axis A of relative rotation in the same way as the rotor electrodes 30 of the rotor 23 of Figures 5-9. In this case, the rotor 51 is moreover provided with a contact region 53, which extends substantially between one of the anchoring regions 26 and the supporting structure 27.

With reference to Figure 11, in use the R/W transducer 16 is bonded directly on anchoring regions 54 of the rotor 51. Provided on the contact region 53 of the rotor 51 are pads 55 for electrical connection of the R/W transducer 16 to a control unit, which is known and is not illustrated here.

The microactuator 50 is not encapsulated, but has the advantage of being simpler and less costly to manufacture, since it requires fewer fabrication steps. The microactuator 50 is thus particularly suitable for being used in protected environments, where the presence of dust and impurities is negligible.

Finally, it is clear that modifications and variations may be made to the micro-electro-mechanical structure described herein, without thereby departing from the scope of the present invention.

First, the micro-electro-mechanical structure according to the invention can be advantageously exploited also for making devices other than microactuators; in particular, it is possible to fabricate sensors such as, for example, rotational accelerometers.

The rotor and the stator could then have a different structure. For example, only two sectors arranged opposite to one another with respect to the axis of relative rotation, instead of four, may be envisaged. If so required, even just a single sector may be provided. The rotor and stator electrodes of each sector may also be arranged all in just one of the half-spaces defined by a plane containing the axis of relative rotation between the stator and the rotor. The supporting structure could be of a different shape, for example circular.

**Claims**

1. A rotational micro-electro-mechanical structure comprising:

   a stator (21), having a plurality of stator electrodes (33, 34); and
   a rotor (23; 51), which is rotatable with respect to said stator (21) about an axis of relative rotation (A) and has a plurality of rotor electrodes (30; 52), said stator electrodes (33, 34) and said rotor electrodes (30; 52) being comb-fingered;

   **characterized in that** at least a first group (20a) of said stator electrodes (33, 34) and said rotor electrodes (30; 52) are arranged parallel to a first plane ($P_1$), which includes said axis of relative rotation (A).

2. The structure according to claim 1, wherein at least a second group (20b) of said stator electrodes (33, 34) and of said rotor electrodes (30; 52) are parallel to said first plane ($P_1$).

3. The structure according to claim 2, wherein said stator electrodes (33, 34) and said rotor electrodes (30) of said first and second groups (20a, 20b) are distributed in opposite half-spaces defined by said first plane ($P_1$).

4. The structure according to claim 2 or 3, **characterized in that** said stator electrodes (33, 34) and said rotor electrodes (30) of said first group (20a) and said stator electrodes (33, 34) and said rotor electrodes (30) of said second group (20b) are arranged opposite with respect to a second plane ($P_2$), which includes said axis of relative rotation (A).

5. The structure according to claim 4, **characterized in that** said second plane ($P_2$) is substantially orthogonal to said first plane ($P_1$).

6. The structure according to claim 4 or 5, **characterized in that** a third group (20c) and a fourth group (20d) of said stator electrodes (33, 34) and of said rotor electrodes (30) are arranged parallel to said second plane ($P_2$).

7. The structure according to claim 6, **characterized in that** said stator electrodes (33, 34) and said rotor electrodes (30) of said third and fourth group (20c, 20d) are distributed in opposite half-spaces defined by said second plane ($P_2$).

8. The structure according to claim 6 or 7, **characterized in that** said stator electrodes (33, 34) and said rotor electrodes (30) of said third group (20c) and said stator electrodes (33, 34) and said rotor electrodes (30) of said fourth group (20d) are arranged opposite with respect to said first plane ($P_1$).

9. The structure according to any one of claims 5 to 8, **characterized in that**, in each of said first, second, third and fourth groups, (20a-20d), said rotor electrodes (30) are arranged at equal distances apart.

10. The structure according to any one of the preceding claims, **characterized in that** said stator (21) and said rotor (23) are substantially symmetrical with respect to said axis of relative rotation (A).

11. The structure according to any one of the preceding claims, **characterized in that** said stator electrodes (33, 34) comprise first and second stator electrodes (33, 34) and **in that** each of said rotor electrodes (30; 52) is arranged between a respective first stator electrode (33) and a respective second stator electrode (34).

12. The structure according to any one of the preceding claims, **characterized by** a plurality of reinforcement ribs (31) of said rotor electrodes (30).

13. The structure according to claim 12, **characterized in that** said stator electrodes (33, 34) have interruptions (37), which house said reinforcement ribs (31).

14. The structure according to any one of the preceding claims, **characterized in that** said stator electrodes (33, 34) and said rotor electrodes (31; 52) are defined by respective plane semiconductor plates with parallel faces.

15. The structure according to any one of the preceding claims, **characterized in that** said stator (21) comprises a pin (22) having as axis said axis of relative rotation (A), and said stator is connected to said pin (22) by means of a plurality of elastic elements (25).

16. The structure according to any one of the preceding claims, **characterized by** a protective cap (45), carried by said rotor (23).

*Fig.1*

*Fig.4*

Fig.2

Fig.3

Fig.5

*Fig.6*

*Fig.9*

Fig.7

Fig.8

EP 1 443 018 A1

Fig.10

*Fig.11*

European Patent
Office

**EUROPEAN SEARCH REPORT**

Application Number

EP 03 42 5015

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 233 213 A (MAREK JIRI)<br>3 August 1993 (1993-08-03)<br>* figures 2-4 *<br>* column 1, line 25 - line 30 *<br>* column 3, line 58 - column 5, line 29 *<br>--- | 1-16 | B81B5/00<br>G11B5/55<br>G01C19/56 |
| X | EP 0 810 441 A (TEXAS INSTRUMENTS INC)<br>3 December 1997 (1997-12-03)<br>* figure 1 *<br>* column 1, line 5 - line 8 *<br>* column 8, line 5 - column 9, line 1 *<br>* column 12, line 31 - line 37 *<br>--- | 1-16 | |
| X | US 5 610 334 A (FIMA HENRI ET AL)<br>11 March 1997 (1997-03-11)<br>* The entire document and in particular*<br>* figure 1 *<br>--- | 1-16 | |
| X | US 5 818 227 A (ZHAO YANG ET AL)<br>6 October 1998 (1998-10-06)<br>* figure 1 *<br>* column 3, line 9 - line 67 *<br>* column 3, line 16 - line 47 *<br>--- | 1 | TECHNICAL FIELDS SEARCHED (Int.Cl.7) |
| A | US 5 995 334 A (FAN LONG-SHENG ET AL)<br>30 November 1999 (1999-11-30)<br>* figure 13 *<br>* column 1, line 27 - line 31 *<br>* column 3, line 16 - line 47 *<br>* column 7, line 26 - line 49 *<br>--- | 1-16 | B81B<br>G11B<br>G01C |

-/--

The present search report has been drawn up for all claims

| Place of search | Date of completion of the search | Examiner |
|---|---|---|
| BERLIN | 15 October 2003 | McGinley, C |

EPO FORM 1503 03 82 (P04C01)

## EUROPEAN SEARCH REPORT

**European Patent Office**

**Application Number**

EP 03 42 5015

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | REILEY T C ET AL: "Micromechanical Structures for Data Storage" MICROELECTRONIC ENGINEERING, ELSEVIER PUBLISHERS BV., AMSTERDAM, NL, vol. 27, no. 1, 1 February 1995 (1995-02-01), pages 495-498, XP004025128 ISSN: 0167-9317 * The entire document * | 1-16 | |
| | | | **TECHNICAL FIELDS SEARCHED** (Int.Cl.7) |

The present search report has been drawn up for all claims

| Place of search | Date of completion of the search | Examiner |
|---|---|---|
| BERLIN | 15 October 2003 | McGinley, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 03 42 5015

This annex lists the patent family members relating to the patent documents cited in the above-mentioned European search report.
The members are as contained in the European Patent Office EDP file on
The European Patent Office is in no way liable for these particulars which are merely given for the purpose of information.

15-10-2003

| Patent document cited in search report | | Publication date | Patent family member(s) | | Publication date |
|---|---|---|---|---|---|
| US 5233213 | A | 03-08-1993 | DE | 4022464 A1 | 16-01-1992 |
| | | | CH | 684029 A5 | 30-06-1994 |
| | | | GB | 2246635 A ,B | 05-02-1992 |
| | | | JP | 3199775 B2 | 20-08-2001 |
| | | | JP | 4232875 A | 21-08-1992 |
| EP 0810441 | A | 03-12-1997 | JP | 9318649 A | 12-12-1997 |
| | | | EP | 0810441 A2 | 03-12-1997 |
| | | | US | 5894091 A | 13-04-1999 |
| US 5610334 | A | 11-03-1997 | FR | 2726361 A1 | 03-05-1996 |
| | | | DE | 69522165 D1 | 20-09-2001 |
| | | | DE | 69522165 T2 | 02-05-2002 |
| | | | EP | 0709653 A1 | 01-05-1996 |
| | | | FI | 955157 A | 29-04-1996 |
| US 5818227 | A | 06-10-1998 | DE | 69712044 D1 | 23-05-2002 |
| | | | DE | 69712044 T2 | 14-11-2002 |
| | | | EP | 1096265 A1 | 02-05-2001 |
| | | | EP | 0882242 A1 | 09-12-1998 |
| | | | JP | 2000506260 T | 23-05-2000 |
| | | | US | 6233811 B1 | 22-05-2001 |
| | | | WO | 9731274 A1 | 28-08-1997 |
| US 5995334 | A | 30-11-1999 | NONE | | |

EPO FORM P0459

For more details about this annex : see Official Journal of the European Patent Office, No. 12/82